# EUROPEAN PATENT APPLICATION

(11) **EP 4 498 308 A1**
(43) Date of publication of application: **29.01.2025**
(21) Application number: 23187948.7
(22) Date of filing: 26.07.2023
(51) Int. Cl.: G06Q 20/06, H04L 9/00, G06Q 20/10, G06Q 20/22, G06Q 20/32, G06Q 20/38, G06Q 20/40

(54) **TRANSACTION METHOD AND SYSTEM**

(71) Applicant: IPCO 2012 Limited, London EC4R 3AB (GB)
(72) Inventor: MORTIMER, James Nicholas, Amersham HP6 5HD (GB); RUSSELL, Clifford Norman, Camberley GU15 3QG (GB)
(74) Representative: Keltie LLP

(57) **Abstract**

A method of processing a transaction between a first user (120), associated with a first user device (170), and a second user (160), associated with a second user device (180), within a transaction system (100), the method comprising: establishing a communication channel (230) between the first and second user devices (170, 180); sending (420), from the first user device to the second user device over the communication channel, a transaction message (320) to initiate the transaction between the first and second users, the transaction message comprising transaction data; receiving (430) the transaction message at the second user device; validating (440) the transaction data within the received transaction message; sending (450), from the second user device to the first user device over the communication channel, a confirmation transaction message, the confirmation transaction message confirming that the transaction has been approved by the first user and second user; sending (460) the confirmation transaction message (330) to the transaction system.

## Description

### TECHNICAL FIELD

The present disclosure relates to a transaction method and system. Aspects of the disclosure relate to a method of processing a transaction between first and second users and user devices configured to process transactions between the first and second users.

### BACKGROUND

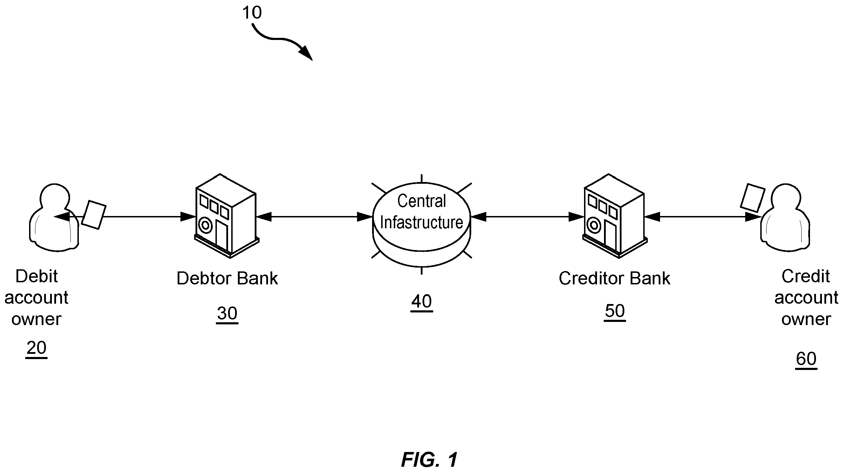

A known payment system 10 is shown in Figure 1 comprising a debit account owner 20, a debtor bank 30 , central payment infrastructure 40 (e.g. payment network), a creditor bank 50 and an credit account owner 60.

The debtor bank (or any other authorised and eligible deposit taking or lending institution) is the financial institution that provides a banking account for the debt account owner (debtor) and the creditor bank (or any other authorised and eligible deposit taking or lending institution) is the financial institution providing a banking account to the credit account owner (creditor).

The debtor may instruct the debtor bank, e.g. via a banking software application installed on the user device 70 of the debtor, to transfer funds from the account of the debtor to the creditor's account. Such a fund transfer is routed via one or more transaction messages through the central infrastructure to the creditor bank where it is allocated to the creditor's account. The creditor may be informed of the funds transfer via a banking software application installed on their own user device 80. In one implementation the user devices (70, 80) may be mobile devices, e.g. smartphones.

Although the creditor shown in Figure 1 is a person, the creditor may be a merchant such that the transfer of funds from debtor to creditor may represent a person-to-person (P2P) or person-to-merchant (P2M) transaction.

An important aspect of payment networks is resilience - i.e. the ability to maintain service in the face of accidental or deliberate disruption or in the face of a lack of infrastructure (e.g. in a remote location). The ubiquity of mobile devices has made people dependent on wireless networks, whether Wi-Fi or cellular to setup and execute payments. Point of Sale terminals can be involved in some payment types (e.g. consumer to merchant) using a mix of cable and wireless connectivity. However, communication paths via radio networks can be impacted by a range of issues, e.g. jamming by technical means; being switched off (e.g. by a service provider during a protest of by the authorities); technical glitches that interrupt services; damage to telecommunications architecture (e.g. storm damage or malicious damage); or poor reception (e.g. when one of the debtor or creditor is in a communications blackspot). Some of these issues may also impact wired Internet communication paths. Such problems can prevent payments from occurring, both P2P or P2M.

It is an aim of the present disclosure to address one or more of the disadvantages associated with the prior art.

### SUMMARY OF THE DISCLOSURE

Aspects and embodiments of the disclosure provide for methods of processing a transaction between first and second users and user devices configured to process transactions between the first and second users as claimed in the appended claims.

According to an aspect of the present disclosure there is provided a method of processing a transaction between a first user, associated with a first user device, and a second user, associated with a second user device, within a transaction system, the method comprising: establishing a communication channel between the first and second user devices; sending, from the first user device to the second user device over the communication channel, a transaction message to initiate the transaction between the first and second users, the transaction message comprising transaction data; receiving the transaction message at the second user device; validating the transaction data within the received transaction message; sending, from the second user device to the first user device over the communication channel, a confirmation transaction message, the confirmation transaction message confirming that the transaction has been approved by the first user and second user; sending the confirmation transaction message to the transaction system.

The method according to the aspect of the present disclosure provides a method of processing a transaction between first and second users who are associated with first and second user devices respectively. Each of the first and second users is associated with a financial institution. Depending on the nature of the transaction, e.g. a push payment transaction or a request to pay transaction, either the first or second user may be the debtor or creditor in the transaction. It is further noted that the transaction may be between to individuals (P2P) or between a person and a merchant (P2M). Within the definitions of the ISO20022 standard, the debtor is the "ultimate debtor", i.e. the ultimate party to which an amount of money is due, and the creditor is the "ultimate creditor", i.e. the party that owes the money to the ultimate debtor.

According to the method of the present disclosure a communication channel, i.e. a direct and secure channel, is set up between the two user devices and a transaction message is exchanged between the two user devices with details of a transaction that has been agreed between the two users. The transaction data within the transaction data is received by the second device where the transaction data is validated and a confirmation transaction message is sent which confirms, between the two users, that the transaction has been carried out.

The confirmation transaction message may then be sent to the transaction system, i.e. to the known payment system, where the details of the transaction can be reconciled between the financial entities associated with each of the two users. In the event of any communication issues within the payment system the confirmation transaction message may be published to a distributed ledger (either immediately if connectivity is available or at the next available opportunity). Where the transaction between the first and second user devices relates to digital currency that is stored in a secure element within one of the user devices then the confirmation transaction message may only be sent to the distributed ledger if required for any regulatory, audit or traceability type purposes - or potentially as input to other systems (e.g. expense tracking).

In accordance with the method according to the present disclosure, the first and second users agree a transaction using their respective user devices which have established a secure communication channel. In this way the transaction can be agreed and processed between the two users without the need for connectivity to the known payment system. Where the transaction relates to the transfer of funds between banking accounts of the two users then the transaction messages act effectively as guaranteed promissory notes that capture the intent of both users to execute and complete a transaction via their respective banks/financial institutions.

The method may comprise, in the event of a processing failure, waiting a predefined period and then publishing the confirmation transaction message to a distributed ledger. It is noted that a processing failure may occur for a variety of reasons, e.g. because of a communication failure within the processing system or because a bank's back office systems have failed. In the event of a processing failure it is also noted that the first or second user devices may initially reattempt to resend the confirmation transaction message to the known payment system before publishing to the distributed ledger.

The first user or the second user may be a debtor in the transaction who is associated with a debtor banking entity. The debtor banking entity may preauthorise transactions up to a preauthorisation limit and the transaction system may be configured to automatically reconcile the transaction on receipt of the confirmation transaction message.

The user device of the debtor may comprise a banking application that is configured to store the preauthorisation limit and the method may comprise subtracting transaction amounts from the preauthorisation limit to determine an available transaction amount and limiting future transactions to the available transaction amount.

In the event the transaction exceeds the preauthorisation limit, prior to sending the transaction message from the first user device to the second user device, the method may comprise contacting the debtor banking entity for authorisation to proceed with the transaction.

The first user device and the second user device may comprise a secure environment, e.g. a secure element or a secure SIM (or other trusted computing platform that, for example, allows for the management of the classic off-line double spend problem), configured to store a cryptocurrency wallet and the transaction may comprise transferring cryptocurrency assets between the first and second user devices.

The communication channel may comprise a point-to-point channel between the first user device and second user device. Examples of point-to-point channels currently available include (but are not limited to): a Wifi channel between the first and second user devices; a point-to-point Bluetooth^{®} channel between the first and second user devices; a communication channel between the first and second user devices using near-field communications protocols; the display of visual data on a display screen of one of the first and second user devices and subsequent capture using a camera device on the other user device of the visual data; an audio communication channel. The user devices may be configured to support two or more different point-to-point channel connection options and further the user devices may order the connection options into an order of connection preference (e.g. Wifi first, then Bluetooth, then near field communication etc.) that the devices will try when setting up the communication channel.

The transaction message may be signed using a private key associated with the first user device and encrypted using a public key associated with the first user device, a public key associated with the second user device, a public key associated with a first user banking entity and a public key associated with a second user banking entity. The confirmation transaction message may be signed using a private key associated with the second user device and encrypted using the public key associated with the first user device, the public key associated with the second user device, the public key associated with a first user banking entity and the public key associated with a second user banking entity.

Subsequent to setting up the communications channel, the first and second user devices may check with a third party authorisation system that the other party is authorised to process a transaction. Such authorisation may also be cached on the first and second user's devices such that in the event of a lack of connectivity to the 3^{rd} party authorisation system, the check can be still undertaken and a risk based rule set used to authorise this, albeit the status was established at a point in the past.

The first and second user devices may exchange user device connectivity data during establishment of the communications channel and, in the event user device connectivity data does not meet predefined connectivity requirements, may communicate with the transaction system to update the user device connectivity data. Exchanging user device connectivity data enables issues such as clock offset issues, out of date security certificates and interrupted device uptime to be detected and such issues managed/mitigated where appropriate.

According to another aspect of the disclosure, there is provided a method of processing a transaction between a first user, associated with a first user device, and a second user, associated with a second user device, within a transaction system, the method comprising; establishing a communication channel between the first and second user devices; sending, from the first device to the second device over the communication channel, a transaction message to initiate the transaction between the first and second users, the transaction message comprising transaction data wherein the transaction message is received at the second user device and the transaction data within the transaction message is received by the second user device; receiving, at the first device over the communication channel, a confirmation transaction message from the second device, the confirmation transaction message confirming that the transaction has been approved by the first user and second user; sending the confirmation transaction message to the transaction system.

According to yet another aspect of the disclosure, there is provided a method of processing a transaction between a first user, associated with a first user device, and a second user, associated with a second user device, within a transaction system, the method comprising; establishing a communication channel between the first and second user devices; receiving at the second user device over the communications channel a transaction message from the first user device, the transaction message comprising transaction data to enable the transaction between the first and second users to be initiated; validating the transaction data within the received transaction message; sending, from the second user device to the first user device over the communication channel, a confirmation transaction message, the confirmation transaction message confirming that the transaction has been approved by the first user and second user; sending the confirmation transaction message to the transaction system.

According to a further aspect of the disclosure, there is provided a first user device configured to process a transaction with a second user device, the first user device being associated with a first user and the second user device being associated with a second user, the first user device comprising; a communication module configured to connect to and send and receive data from a corresponding communication module on the second user device; a processor arranged to: establish a communication channel via the communication module with the second user device; generate a transaction message comprising transaction data to enable the transaction between the first and second users to be initiated; send the transaction message via the communication module to the second user device; receive a confirmation transaction message from the second user device via the communication module, the confirmation module confirming that the transaction has been approved by the second user; send, via a network communication module, the confirmation transaction message to a transaction system.

According to a still further aspect of the disclosure, there is provided a second user device configured to process a transaction with a first user device, the first user device being associated with a first user and the second user device being associated with a second user, the second user device comprising: a communication module configured to connect to and send and receive data from a corresponding communication module on the second user device; a processor arranged to: establish a communication channel via the communication module with the first user device; receive a transaction message via the communication module from the first user device, the first user device comprising transaction data to enable the transaction between the first and second users to be initiated; validate the transaction data within the received transaction message; generate a confirmation transaction message, the confirmation transaction message confirming that the transaction has been approved; send, from the second user device to the first user device over the communication channel, the confirmation transaction message; send, via a network communication module, the confirmation transaction message to a transaction system.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the disclosure will now be described, by way of example only, with reference to the accompanying drawings, in which:
Figure 1 shows a known payment system;
Figure 2 shows a payment system in accordance with an embodiment of the present disclosure;
Figure 3 shows a method of processing a transaction in accordance with an embodiment of the present disclosure;
Figure 4 shows user devices associated with first and second users in accordance with an embodiment of the present disclosure;
Figure 5 shows a payment path in accordance with an embodiment of the present disclosure;
Figure 6 shows a further payment path in accordance with an embodiment of the present disclosure.

### DETAILED DESCRIPTION

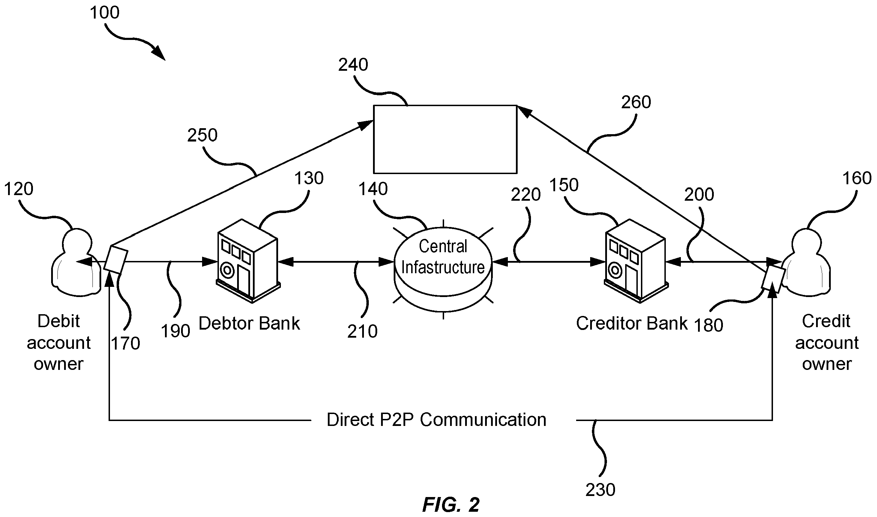

A method, user devices, payment system and payment paths in accordance with an embodiment of the present disclosure are described herein with reference to the accompanying Figures 2 to 5.

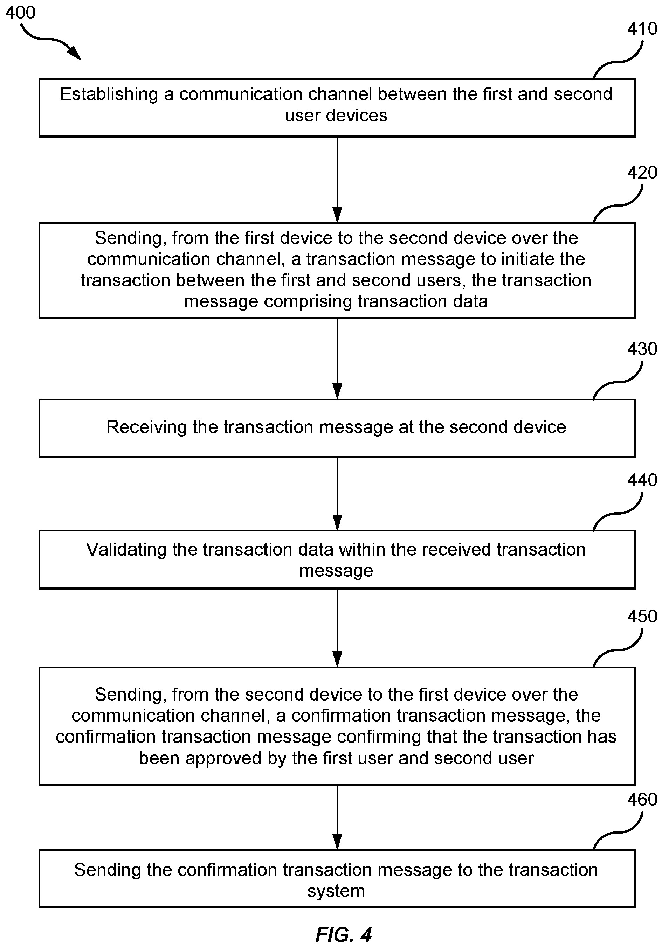

With reference to Figure 2, a payment system 100 in accordance with an embodiment of the present disclosure is described. Similar to Figure 1, the payment system 100 comprises a debit account owner (debtor) 120, a debtor bank 130 , central payment infrastructure 140 (e.g. payment network), a creditor bank 150 and an credit account owner (creditor) 160. The debtor 120 is associated with a user device 170 and the creditor is associated with a user device 180 as shown in more detail in Figure 4. In one implementation the user devices (170, 180) may be mobile devices, e.g. smartphones. In other implementations at least one of the user devices may be a point-of-sale system at a merchant.

The debtor 120 may connect to the debtor bank 130 via a communication path 190 and the creditor 160 may connect to the creditor bank 150 via a communication path 200. The debtor bank 130 and creditor bank 150 are in turn in communication via communication paths 210 and 220 respectively with the central payment infrastructure 140.

In instances where the debtor has a stable connection to the debtor bank 130 via communication path 190, and additionally the rest of the payment system 100 provides a stable (debtor) end-to-(creditor) end environment, then a transaction from debtor to creditor may be processed in a traditional manner, e.g. the debtor may instruct the transfer of funds to the creditor via a banking application on their user device 170. The transaction may then progress through the transaction system until the creditor receives confirmation at their user device 180.

However, in the world of real time payments and card payments, invariably from time to time, things may go wrong with the underlying technical infrastructure. From a merchant's point of view, this can create problems as customers are unable to pay. If a customer has placed fuel in their car and their payment was unable to process, can the merchant trust they will return and pay? How long will customers stand in the queue and wait? If the problem is bank specific, it also makes individual customers feel vulnerable, exposed or embarrassed.

A variety of scenarios may occur that prevents the transaction from debtor to creditor to go through, for example:
- there is no connectivity whatsoever (e.g. within an underground carpark);
- the debtor is unable to connect to their bank, i.e. the mobile app has lost connection or the bank has a technical issue;
- debtor's bank is unable to connect to the central infrastructure (this may be down to an issue with the central infrastructure or it could be an issues with the debtor's bank);
- the creditor's bank may be lacking connectivity to the central infrastructure or there may be a back office failure at the creditor's bank;
- the creditor may have no connectivity, e.g. in the case of a merchant the point of sale terminal may not have a connection to the debtor's bank.
- the central infrastructure may be under stress due to peak volumes and either be unable to process some payments resulting in a number of timeouts; or potentially experience long delays before payment finality can be determined.

As shown in Figure 2, a peer-to-peer (P2P) communication path 230 has been set up, as described below, between the debtor 120 and creditor 160. The debtor 120 and creditor 160 are additionally in communication with a distributed ledger system 240 (the debtor 120 is in communication with the distributed ledger system 240 via communication path 250 and the creditor 160 is in communication with the distributed ledger system 240 via communication path 260.

[It is noted the debtor 120 and creditor 160 are enrolled and subscribed to the distributed ledger system 240. This enables them to publish transactions to the distributed ledger system 240 in an opportunistic manner when opportunities or the need arises. It is noted that the communication paths 250 and 260 may therefore be set up as required rather than needing the creditor and debtor to be permanently connected to the distributed ledger system 240. The distributed ledger system 240 may be a publicly available ledger system but for privacy reasons the ledger system 240 may be a private ledger that is securely operated by the financial institutions 130, 150 with controls to ensure that only information relevant to the parties concerned can be viewed by them.]

Where a transaction between the debtor and creditor cannot be processed in the traditional manner described above, the creditor and debtor may agree a transaction over the peer-to-peer communication path 230 in accordance with embodiments of the present disclosure. Depending on the nature of the communication, central infrastructure or back office issue that has prevented the transaction from processing over the traditional processing rails, the transaction that is agreed between the creditor and debtor may later be reconciled with the debtor bank 130 and creditor bank 150 and, in some instances, may also get published to the distributed ledger system 240.

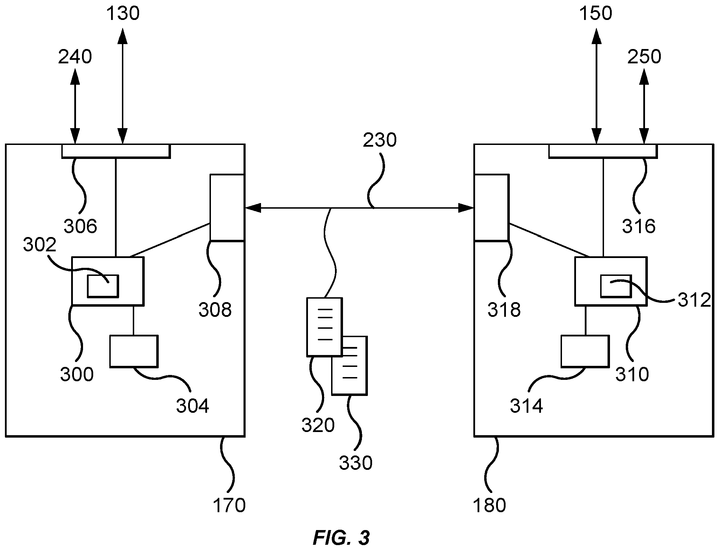

Turning to Figure 3, the user device 170 associated with the debtor 120 and the user device 180 associated with the creditor 160 are shown in more detail.

The user device 170 comprises a processor 300 running a banking application 302. The processor 300 is in communication with a secure element 304. It is noted that the secure element 304 comprises a secure operating system (OS) in a tamper-resistant processor chip or secure component.

The user device 170 also comprises a network communication module 306 that is configured to send and receive data with the debtor bank 130 and also the distributed ledger system 240. The user device 170 further comprises a P2P communication module 308 that is configured to connect to and send and receive data from a corresponding P2P communication module 318 on the user device 180 associated with the creditor 160. The processor 300 is in communication with both the network communication module 306 and the P2P communication module 308.

The user device 180 associated with the creditor 160 comprises equivalent components to the user device 170, namely a processor 310, banking application 312, secure element 314, network communication module 316 and P2P communication module 318.

As described below in relation to Figure 4, the first user device 170 and second user device 180 exchange transaction messages 320 and confirmation transaction messages 330 during a transaction.

Turning to Figure 4, a method of processing a transaction between a first user, associated with a first user device, and a second user, associated with a second user device, within a payment system 100 in accordance with embodiments of the present disclosure is described.

It is noted that the transaction may be initiated by the debtor 120, in which the debtor sends funds to the creditor 160, or by the creditor 160, in which the creditor requests funds from debtor 120. The latter scenario may occur more often in transactions between a merchant and an individual account holder, either face-to-face or over the internet in an e-commerce model.

Depending on the nature of the transaction therefore, the first user may be the debtor 120 (and the first user device may be the user device 170) and the second user may be the creditor 160 (and the second user device may be the user device 180) or alternatively the first user may be the creditor 160 (and the first user device may be the user device 180) and the second user may be the debtor 120 (and the second user device may be the user device 170).

According to the method shown in Figure 4, a communication channel 230 is established in step 410 between the first and second users (120, 160). This communications channel is a direct point to point communications channel and is secure, thereby enabling encrypted communications between the first and second users.

In step 420, the first device sends a transaction message 320 over the communication channel 230 to the second device in order to initiate a transaction between the first and second users (120, 160). The transaction message 320 comprises transaction data as described in more detail below. The transaction message also comprises data related to the first and second users (120, 160). It is noted that by sending the transaction message the first user effectively confirms that they approve the transaction. The point at which the communication channel 230 is established may be varied from the above order, e.g. the first device may generate and prepare the transaction message 320 and then establish the communication channel 230 and then send the transaction message.

As noted above depending on whether the creditor or debtor initiates the transaction, the first device may either be the debtor's user device 170 or the creditor's user device 180.

In step 430 the transaction message 320 is received at the second device.

In step 440, the transaction data within the received transaction message 320 is validated (as described in more detail below).

In step 450, a confirmation transaction message 330 is sent from the second device to the first device over the communication channel 230 that confirms that the transaction has been approved by the first user and second user.

In step 460, the confirmation transaction message 330 is sent to the transaction system, namely to the debtor bank 130 and creditor bank 150. It is noted that either or both of the first and second user device (170, 180) may send the confirmation transaction message 330 to the transaction system. It is also noted that either or both of the first and second user device (170, 180) may also send the confirmation transaction message 330 to the distributed ledger system 240.

As discussed further below the exchanged transaction messages may be digitally signed by both the first and second users such that the confirmation transaction message is non-repudiable by either the first or second user since they will have jointly authored, authenticated and accepted the message's content and intent to make and receive the payment.

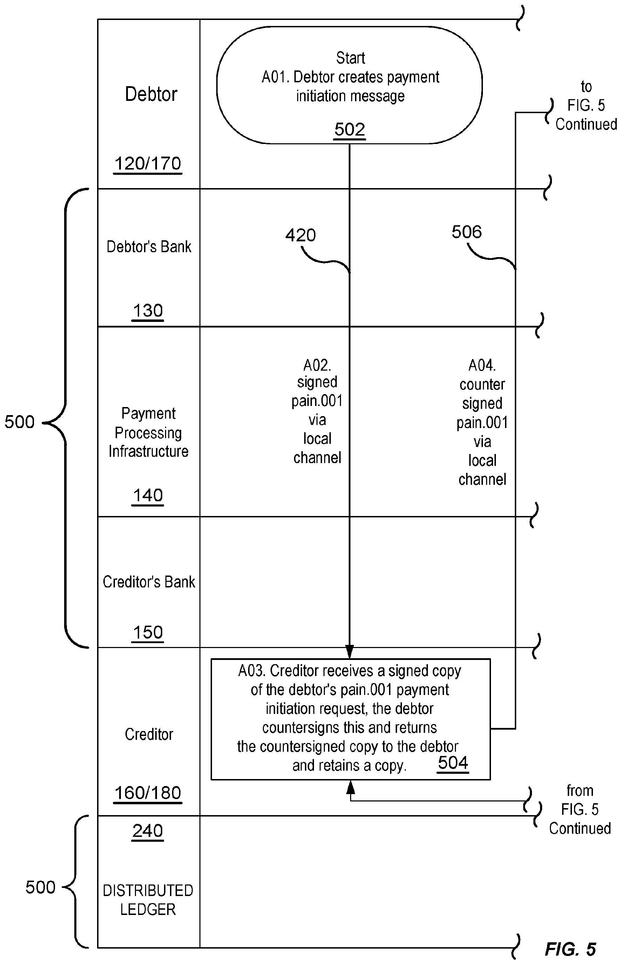

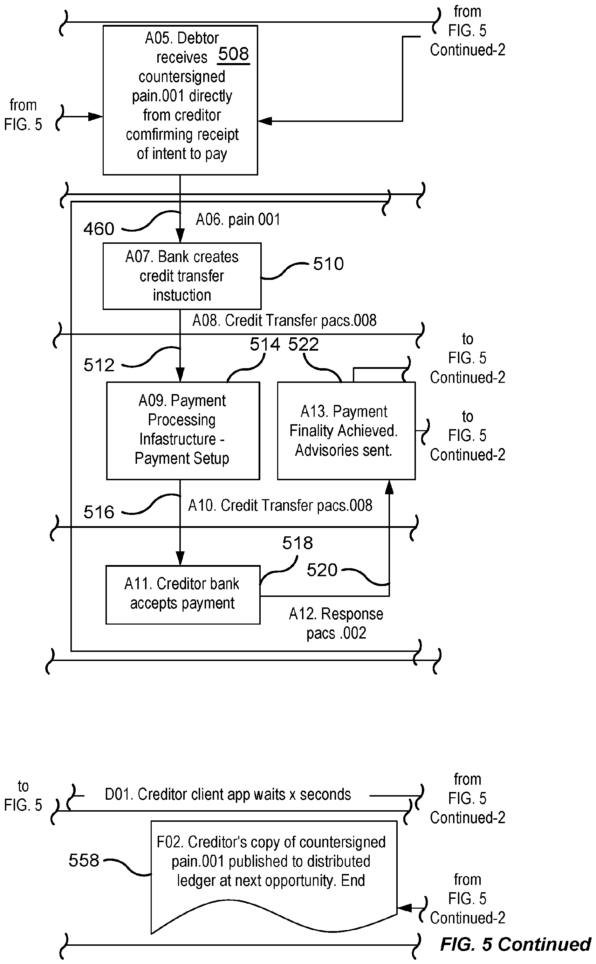

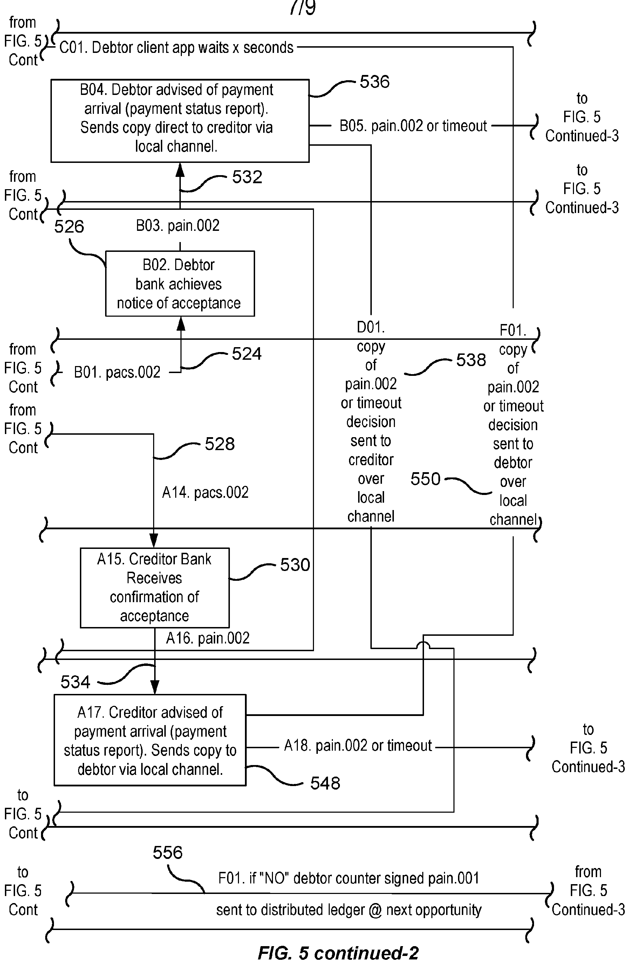

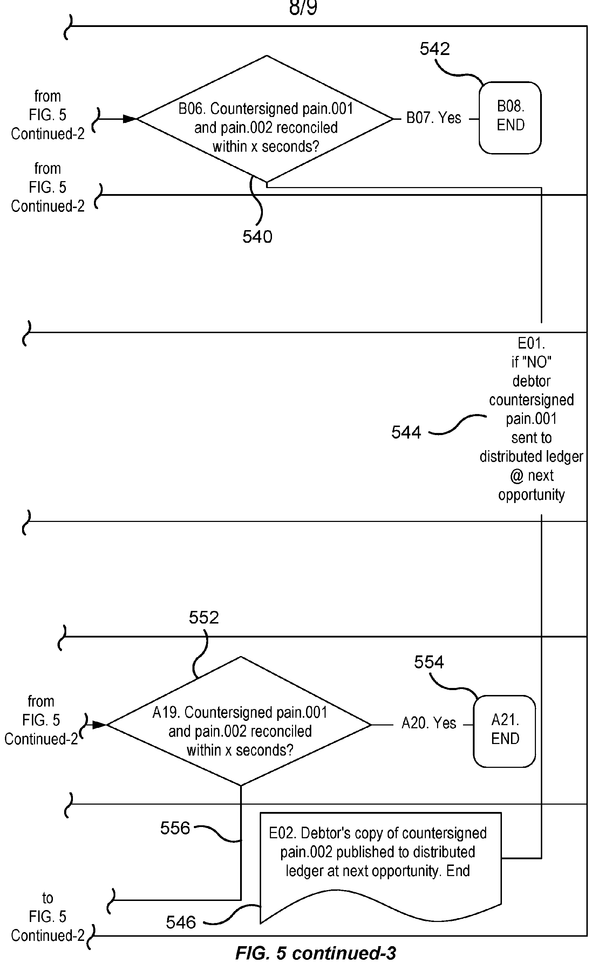

Figure 5 shows a payment system 100 in accordance with an embodiment of the present disclosure in which a transaction is initiated by the debtor 120 and received by the creditor 160. In the transaction of Figure 5 therefore the debtor is the first user and the debtor's user device 170 is the first user device and the creditor 160 is the second user and creditor's user device 180 is the second user device. In the following description where reference is made to the debtor 120 sending or receiving messages or the creditor 160 sending or receiving messages this should be read as including the user device associated with the debtor/creditor sending or receiving the message.

Within Figure 5, the transaction message 320 and confirmation transaction message 330 are referred to as Payment Initiation messages (or "pain" messages). The pain messages are described in further detail below but it is noted that they are secure encrypted digital signed non-repudiable transaction messages. These messages are also referred to below as Secured Payment Initiation Messages (or SPAIN messages).

The payment flows shown in Figure 5 are contrived in that the transaction that is initiated by the debtor 120 is shown to both complete as normal (via the debtor's bank 130, payment infrastructure 140 and creditor bank 150) and also to publish to a distributed ledger system 240 as a fallback in response to a transaction processing issue (e.g. communications failure, back office issue). The debtor bank 130, payment infrastructure 140, creditor bank 150 and distributed ledger system 240 may collectively be referred to herein as the transaction system 500.

Turning to Figure 5, the debtor 120 initiates a transaction with the creditor 160 in step 502 by creating a payment initiation message ("pain.001"), i.e., a transaction message 320. The "pain.001" is signed by the debtor (as described in more detail below) and is then sent, step 420 (see Figure 4) to the creditor 160 via the communications channel 230 between the debtor 120 and creditor 160.

In 504 the creditor receives the signed "pain.001" message from the debtor. The transaction data contained within the transaction message 320 (the signed "pain.001" message from the debtor) is validated (as discussed further below and as referenced in step 440 of Figure 4). Assuming the creditor wishes to proceed they countersign the "pain.001" transaction message 320 (to form the confirmation message 330 shown in Figure 3).

The countersigned "pain.001" message is returned over the communications channel 230 to the debtor in step 506.

The receipt in step 508 by the debtor 120 of the countersigned "pain.001" message confirms (to the debtor) that both parties agree to an intent to enter into a transaction as defined in the "pain.001" message created in step 502.

It is noted that the "pain.001" that is sent from the debtor 120 to the creditor 160 in step 420 may be configured by design to either be guaranteed by the debtor bank 130; or non-guaranteed. This arrangement may be thought of as analogous to physical cheques; guaranteed cheques and banker's drafts.

Where a bank has offered a customer the ability to use the method according to embodiments of the present disclosure, the banking application associated with the debtor may be configured by the bank to be authorised to undertake transactions up to a certain threshold within a given period of time and the bank may guarantee settlement of any transaction falling within the threshold and time period constraints.

The "pain.001" message may also draw upon funds (e.g. crypto-assets) in a digital wallet that is stored locally on the user device (e.g. within the secure element 304 within user device 170), subject to the user device having the required hardware (e.g. a secure element or equivalent) to allow offline payments or connectivity to a central register to avoid the double spend problem discussed below. Any transaction message in the form of a "pain.001" message sent from debtor may be configured to clearly flag to the creditor if the transaction is guaranteed or not; and allow the creditor to make a risk-based decision.

As shown in Figure 5, the debtor then forwards, step 460, the countersigned "pain.001" message to the debtor's bank 130. It is noted that in Figure 5 it is the debtor that sends the countersigned "pain.001" message into the "transaction system 500". In alternative embodiments the creditor may also send the countersigned pain message into the transaction system 500 (via the creditor bank 150) in addition to the debtor or the creditor may be the party that is solely responsible for sending the countersigned "pain.001" message 320 to the transaction system 500. (As discussed above, one or both of the debtor/creditor may send the countersigned pain message into the transaction system 500 such that records may be updated. As such once the creditor has countersigned a received transaction message from the debtor, payment may be initiated over banking rails as long as the creditor has a network connection. The return of the countersigned copy of the transaction message to the debtor allows the debtor's records to be updated. In other words, the act of countersigning the transaction message is the point at which the transaction over banking rails can be initiated and the sharing of the countersigned transaction message adds mutually beneficial resilience to the system in the even that the creditor loses network connectivity.)

Steps 510, 512, 514, 516, 518 and 520 correspond to transaction processing actions taken by the processing system 500 in the absence of communication or other transaction processing issues (business as usual).

In step 510 the debtor bank 130 creates a credit transfer instruction and sends 512 this into the central payment infrastructure 140. The central payment infrastructure 140 which then sets up, step 514, the payment instruction and sends this in step 516 on to the creditor bank which accepts the payment in step 518.

The creditor bank then sends in step 520 a response to the payment infrastructure 140 which is received in step 522. The payment infrastructure 140 then sends in step 524 a notice of acceptance to the debtor bank 130 which is received in step 526. The payment infrastructure 140 also sends, in step 528, a confirmation of notice of acceptance to the creditor's bank 150 which is received in step 530.

Upon receipt of the notice of acceptance, the debtor bank 120 sends, in step 532, a payment initiation response message ("pain.002") back to the debtor 120. Upon receipt of the confirmation of acceptance, the creditor bank sends a payment initiation message ("pain.002") in step 534 to the creditor 160. [It is noted that the pain.002 message is a response to a pain.001 message and provides a status as to the outcome. In the ISO20022 standard the official name for the pain.002 message is the "Customer Payment Status Report" and the pain.001 is the "Customer Credit Transfer Initiation". The pain.001 and pain.002 are part of the Payments Initiation Message set (PAIN) - https://www.iso20022.org/iso-20022-message-definitions?business-domain=1.]

The banking application 302 on the user device 170 of the debtor 120 receives, 536, the further payment initiation message ("pain.002") and in step 538 forwards a copy over the communications channel 230 to the creditor 160 (i.e. to the equivalent application 312 on the user device 180 of the creditor 160).

The process steps described above assume that the transaction between the debtor 120 and creditor 160 has been successfully concluded over the traditional payment infrastructure 140 and that there have been no processing or communication issues within either the debtor's bank 130 or the creditor's bank 150.

However, to ensure the transaction is processed in the event of some kind of processing issue, the banking application 302 is configured, in step 540, to check, after a given time period ("X" seconds), whetherthe countersigned "pain.001" message that was returned over the communications channel 230 to the debtor in step 506 from the creditor can be reconciled with a further payment initiation message ("pain.002") received from the debtor's bank 130.

If a "pain.002" message can be reconciled with the countersigned "pain.001" message, then the transaction processing at the debtor's side ends at step 542.

If the payment application 302 is unable to reconcile a "pain.002" message with the countersigned "pain.001" message then this indicates that there has been a processing issue with the transaction (e.g. an issue with one of the banks 130, 150 or with the payment infrastructure 140). In this event the payment application 302 is configured to output, in step 544, a copy of the countersigned "pain.001" message to the distributed ledger system 240. In step 546 the distributed ledger system 240 receives the countersigned "pain.001" from the debtor and publishes it to the ledger. Since the transaction between the debtor 120 and creditor 160 has been published to the ledger system 240 then all relevant parties - debtor 120, creditor 160, debtor bank 130 and creditor bank 150 - have sight of the transaction which can then be reconciled within the respective parties' systems once the transaction processing issues are resolved.

The banking application 312 on the user device 180 of the debtor 160 receives, 548, the further payment initiation message ("pain.002") and in step 550 forwards a copy over the communications channel 230 to the debtor 120 (i.e. the banking application 312 forwards the copy to the equivalent application 302 on the user device 170 of the debtor 120).

The process steps described above assume that the transaction between the debtor 120 and creditor 160 has been successfully concluded over the traditional payment infrastructure 140 and that there have been no processing or communication issues within either the debtor's bank 130 or the creditor's bank 150.

However, to ensure the transaction is processed in the event of some kind of processing issue, the banking application 312 may, in addition to the banking application 302 associated with the debtor 120, be configured, in step 552, to check, after a given time period (e.g. a few milliseconds/seconds), whether the countersigned "pain.001" message that was signed by the creditor in step 504 can be reconciled with a further payment initiation message ("pain.002") received from the creditor's bank 130.

If a "pain.002" message can be reconciled with the countersigned "pain.001" message, then the transaction processing at the creditor's side ends at step 554.

If the payment application 312 is unable to reconcile a "pain.002" message with the countersigned "pain.001" message then this indicates that there has been a processing issue with the transaction (e.g. e.g. an issue with one of the banks 130, 150 or with the payment infrastructure 140). In this event the payment application 312 is configured to output, in step 556, a copy of the countersigned "pain.001" message to the distributed ledger system 240. In step 558 the distributed ledger system 240 receives the countersigned "pain.001" from the debtor and publishes it to the ledger. Since the transaction between the debtor 120 and creditor 160 has been published to the ledger system 240 then all relevant parties - debtor 120, creditor 160, debtor bank 130 and creditor bank 150 - have sight of the transaction which can then be reconciled within the respective parties' systems once the transaction processing issues are resolved.

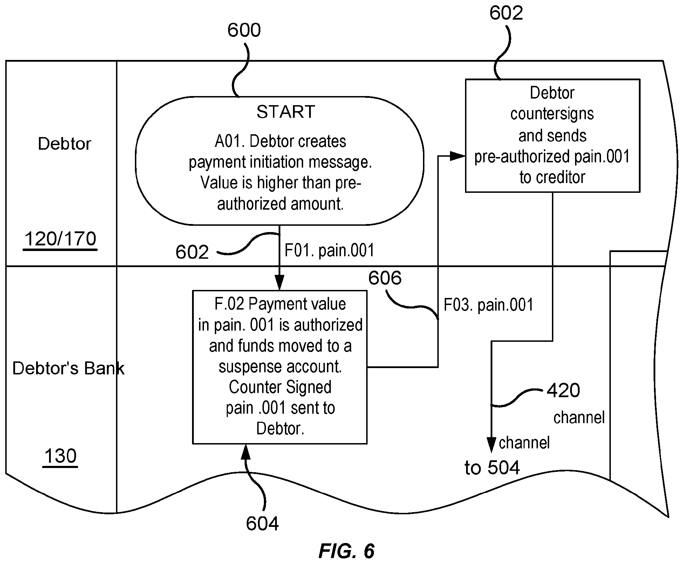

As noted above, the debtor's bank 130 may configure their arrangement with the debtor 120 such that transactions between a debtor and creditor that are below a pre-authorisation amount (within a given period of time) are guaranteed to be settled. In the event however that a debtor 120 wishes to enter into a transaction that exceeds the pre-authorisation amount then the payment flows described above in relation to Figure 5 may be modified according to the additional payment flow of Figure 6.

In Figure 6, the debtor 120 is again initiates the transaction. In step 600 the debtor 120 creates, via the banking application 302 on their user device 170 a payment initiation message (transaction message 320/"pain.001" message). In this instance however the transaction amount exceeds the pre-authorised amount that the debtor 120 has agreed with their bank 130. This pre-authorisation limit is checked by the banking application 302 as the debtor sets up the transaction and since the requested amount exceeds the threshold the banking application 302 is configured to send, in step 602, the "pain.001" message to the debtor's bank 130 requesting a transaction that exceeds the pre-authorised amount.

In step 604 the debtor's bank 130 moves the funds required (if present) to a suspense account and sends, in step 606, a counter-signed "pain.001" message back to the debtor 120.

In step 606, the debtor countersigns the "pain.001" message and then sends, in step 420, this to the creditor 160 over the communications link 230. The payment flow then continues as before from step 504.

In the event of the Ultimate Debtor 120 not having connectivity to their bank 130 for whatever reason and they are unable to secure permission to exceed the pre-authorisation limit; the Ultimate Debtor 120 would include this fact in the pain.001 message sent to the Ultimate Creditor 160, who could then decide to initiate a Request to Pay transaction. This flexibility to use any available route ensures that payments in excess of the pre-authorisation limit can still be made in most cases of failure.

### Summary

Additional information on the structure, content and methods around the initial setup messages, along with expected benefits and the problems solved, are discussed below.

In the following description ISO 20022 based terms terminology has been used, by way of example, to describe the various actors, namely:
- "Ultimate Debtor" = the party that owes an amount of money to the Ultimate creditor. In the context of embodiments of the present disclosure, the Ultimate Debtor is also the debit account owner. As shown in the above figures, the ultimate debtor is debtor 120.
- "Ultimate Creditor" = the party to which an amount of money is due. In the context of embodiments of the present disclosure, the creditor is also the credit account owner. As shown in the above figures, the ultimate creditor is creditor 160.
- "Debtor Agent" = the financial institution servicing an account for the debtor. As shown in the above figures, the debtor bank is debtor bank 130.
- "Creditor Agent" = the financial institution servicing an account for the creditor. As shown in the above figures, the creditor bank is creditor bank 150.

As noted above in relation to Figure 5, transaction message 320 and confirmation transaction messages 330 are also referred to herein as either Payment Initiation messages (or "pain" messages) or Secured Payment Initiation Messages (or SPAIN messages) in light of the fact they are secure digital signed non-repudiable transaction messages. In the following discussion the term "SPAIN" is used but the various terms "transaction message", "confirmation transaction message", "pain" message, "SPAIN" message are regarded as interchangeable.

An important aspect of payment networks is resilience - i.e. the ability to maintain service in the face of accidental or deliberate disruption as discussed above. Where problems occur in a transaction system this can prevent payments from occurring, both person-2-person, or person to merchant.

Whatever the cause of the problem, people with mobile phones, or other devices including but not limited to tablets, PCs and the like, still have opportunities to improvise alternative means of communication and to setup payment instructions - even if the clearing and settlement of the payment is delayed.

The method and system according to embodiments of the present disclosure provides a mechanism for ensuring both the ultimate debtor and ultimate creditor both have identical non-repudiable encrypted copies of a digital guaranteed transaction. Secure credentials held within the customer's bank application (302, 312) enable the user's bank (130, 150) to effectively offer a limit on the size of payment they would be prepared to guarantee without having a direct interaction with the bank's back-office system to authorize the funds. Where the devices are equipped with a Secure Element or equivalent Trusted Computing Chip; banks may be able to apply further controls.

Within the present application, the transaction messages (300, 312) that are exchanged between the ultimate debtor/creditor are referred to as secure digitally signed non-repudiable Payment Initiation ("pain") messages or simply as Secured Payment Initiation Messages or SPAIN Messages.

### Purpose of SPAIN messages

SPAIN messages enable payments to complete when there is a lack of access to a central infrastructure, i.e. payments in remote places or in the event of a technical glitch. At the end of an exchange, both the payer/debtor and the payee/creditor have identical copies of the SPAIN message in a non-repudiable form.

The SPAIN message identifies the ultimate creditor (160); ultimate debtor (120); the creditor's bank (150); and the debtor's bank (130); and the properties of the payment (amount; requested execution date; method; and transaction ID along with any other information such as a receipt or invoice - as is common in the ISO 20022 standard) in an encrypted form that provides security.

In the ISO 20022, the term Ultimate Debtor/Creditor has a specific meaning, and this at times overlaps with the specific meaning ascribed to the term Debtor/Creditor and/or changes during the payment flow depending upon which function is being carried out. For the purposes of this document, the terms are interchangeable and should be applied in the manner that the local scheme would understand these.

The use of SPAIN messages provides a number of advantages, namely:
- As both parties (debtor/creditor) have copies of the SPAIN message this enables any double spend problems to be detected. It is in effect "double-entry-digital-book keeping".
- The process is ideally complimented by the use of secure tokens and or the use of a "secure element" (304, 314) which is available within many phones and computers on the market today. The use of secure elements within the transaction also reduces the risk of double spend issues occurring.
- Where a bank is prepared to offer a credit facility or prefunded wallet to a customer; then absolute certainty of payment settlement is assured.
- As both parties have copies of the SPAIN message, then either party may be able to submit them and they will be recognized by both debtor and creditor banks. As such, as soon as either party has some connectivity, the payment may be submitted and processed as if both parties had connectivity - and the banks were fully operational.
- SPAIN messages are promissory initiation messages underwritten by the debtor's bank. They can be applied to many payment methods including crypto, cheques, cards and real time payments. While most payments will be funded using a bank authorised facility, where a user has the suitable technology (described later on) to allow them to store a crypto asset (e.g. a CBDC) locally on their mobile phone, it is possible for both parties to complete a P2P offline payment without using clearing and settlement with the same user experience - and the Ultimate Creditor (160) can spend the acquired crypto asset again immediately. For debt funded payments, as soon as either party is digitally reconnected; the clearing and settlement process can complete and then the funds can be re-spent, but the checking in with the bank is a pre-requisite.
- SPAIN messages can be created from push payments; or pull payments (i.e. a push payment following a request to pay). The message flows differ slightly and so does the order of information sharing, but the final form of the SPAIN message is the same - both the ultimate debtor (120) and ultimate creditor (160) have identical copies of the SPAIN message, it is the order of sharing, signing and counter signing credentials and data that changes.

It is noted that, in the event both the debtor and the creditor lose their user devices (170, 180) which hold the SPAIN messages they have exchanged (as described above in relation to Figures 4 to 6) before they are able to publish these; then any record of the transaction will be lost. The methods according to embodiments of the present disclosure requires at least one of the parties to communicate the intention and agreement made to the transaction system 500.

The SPAIN message that encapsulates the transaction that the debtor wishes to enter into with the creditor, may be either guaranteed by the debtor bank (130); or non-guaranteed. Where the SPAIN message draws upon funds stored in a digital wallet stored locally on the mobile phone (170); then these payments may also be guaranteed. SPAIN messages may be configured to clearly state if the payment is guaranteed or not; and allow the creditor (160) to make a risk-based decision.

Where a double-spend risk exists for locally stored assets; then the capabilities of the "secure-element" (304) or other secure token dictate the scope of what may be undertaken. In effect the secure element (304) either has to provide secure storage of the assets; or a record of the state of the device (170) such that if it is restored to a previous state with the intent of making a double spend; then such a change can be detected.

### Certificates, Encryption, Signing and Non Repudiation.

An example implementation of a transaction system in accordance with embodiments of the present disclosure is now described.

SPAIN messages may be encrypted and signed at various points. Encryption provides privacy and security and signing provides trust and non-repudiation. This may be done by any suitable method, and for the purposes of embodiments of the present disclosure, it is assumed that a Public Key Infrastructure is used.

A Certificate Authority (CA), e.g. a scheme operator; or recognised commercial provider, government agency or other body, validates and assures that only licensed deposit taking institutions may be appointed as Registration Authorities (RA).

RAs may comprise Banks and other financial institutions who do not directly create digital certificates, but are authorised to request that the CA creates these, and the bank is responsible for securely transporting these and embedding them into the storage within mobile banking applications (302, 312) - or more preferably, into the secure element (204, 314) within a mobile phone (user devices 170, 180).

Each customer (who will fulfil the role of the ultimate creditor (160) or ultimate debtor (130)); has a unique digital certificate that contains their bank identifier; account identifier; verified account name and other details deemed appropriate.

As each bank has issued a credential from a common or mutually recognised CA which includes a directory of all the participating banks and other financial institutions; an ultimate debtor and ultimate creditor can be assured that the person or business that they are dealing with is legitimate and a customer of the bank.

Each certificate may have a variable that will define the maximum off-line period of trustworthiness. This period may be used to track whether or not the certificate can still be trusted without connecting back to the bank. If this period is exceeded, then the certificate is temporarily revoked.

Each end customer (i.e. the ultimate debtor (130) and ultimate creditor (160)) comprises a public key and a private key. The private key is stored securely within the bank application (302, 312) or more preferably on the secure element (304, 314) in a user device (170, 180), e.g. a smartphone. The public key is provided to be shared with other parties to enable the trust services.

An X.509 certificate is a digital certificate based on the widely accepted International Telecommunications Union (ITU) X.509 standard, which defines the format of public key infrastructure (PKI) certificates. Note: although an X.509 certificate is described here the skilled person will appreciate that other standards are available that can offer equally suitable protections.

X.509 Version 3 digital certificates support the following fields:
1. Subject: Provides the name of the computer, user, network device, or service that the CA issues the certificate to. The subject name is commonly represented by using an X.500 or Lightweight Directory Access Protocol (LDAP) format. According to the example implementation , this field may be populated with the account name as held by the bank.
2. Serial Number: Provides a unique identifier for each certificate that a CA issues, t This serial number may be constructed from the international bank account number (IBAN) relating to that customer, the date of issue YYYYMMDD (to ensure uniqueness) and a supplemental qualifier which is optionally applied where there is more than one authorised user of that account. For example, GB33NWBK2020155555555520231231 would be valid for a sole bank account, while GB33BUKB2020155555555520231231C would be valid for a joint account where this certificate was issued to the third account holder - "C". For business accounts, where there a many authorised signatories or store branches, then this might be an employee ID or POS ID.
3. Issuer: Provides a distinguished name for the CA that issued the certificate. The issuer name is commonly represented by using an X.500 or LDAP format. For this example implementation, the issuer may be the bank identifier code (BIC) associated with the IBAN used in the serial number (NWBK in the fake example above) would be accompanied by NWBKGB2L here.
4. Valid From: Provides the date and time when the certificate becomes valid.
5. Valid To: Provides the date and time when the certificate is no longer considered valid. The date when an application or service evaluates the certificate must fall between the Valid From and Valid To fields of the certificate for the certificate to be considered valid.
6. Public Key: Contains the public key of the key pair that is associated with the certificate.
7. Signature Algorithm: The algorithm used to sign the certificate.
8. Signature Value: Bit string containing the digital signature.

In addition to the version 1 fields, X.509 version 3 certificates include extensions that provide additional functionality and features to the certificate. These extensions are optional and are not necessarily included in each certificate that the CA issues:
1) Subject alternative name: A subject can be presented in many different formats. For example, if the certificate must include a user's account name in the format of an lightweight directory access protocol (LDAP) distinguished name, e-mail name, and a user principal name (UPN), you can include the e-mail name or UPN in a certificate by adding a subject alternative name extension that includes these additional name formats. For this example implementation the following optional extensions are defined:
   a) Full Legal Name (using the format used in the national's passport)
   b) Business Legal Name
   c) Business Trading Name
   d) Branch Identifier or Routing Number (e.g. Sort Code in the UK, or Routing Transit Number in the USA)
   e) Sub-Account Reference (for collection accounts (e.g. gas bill or credit card) or accounts like building society accounts with roll numbers; there is typically a single account number and sort code or IBAN, and then a reference field is used to identify the customer account into which to apply funds). This field will identify the sub-account.
   f) Additional wallet providers and crypto exchanges that have been linked to the primary bank account and can be used in transactions made according to the example implementation;
   g) Flag to indicate that additional verified data attributes that are not stored in the certificate, but are stored securely within the bank application (302, 314) and that are available upon request - subject to consent being granted. See Additional Data Fields later on.
2) CRL distribution points (CDP): When a user, service, or computer presents a certificate, an application or service must determine whether the certificate has been revoked before its validity period has expired. The CDP extension provides one or more URLs where the application or service can retrieve the certificate revocation list (CRL) from. For off-line use cases, this service will rely on banks providing a token of non-revocation which is then opportunistically downloaded to the banking application (302, 312) each time a user (debtor or creditor) connects to the transaction system - and this must be refreshed periodically.
3) Authority Information Access (AIA): After an application or service validates a certificate, the certificate of the CA that issued the certificate - also referred to as the parent CA - must also be evaluated for revocation and validity. The AIA extension provides one or more URLs from where an application or service can retrieve the issuing CA certificate.
4) Enhanced Key Usage (EKU): This attribute includes an object identifier (OID) for each application or service a certificate can be used for. Each OlD is a unique sequence of numbers from a worldwide registry. According to the example implementation, each payment scheme in each country could be issued a value, and this field may be used to capture these.
5) Certificate policies: Describes what measures an organization takes to validate the identity of a certificate requestor before it issues a certificate. An object identifier (OID) may be used to represent the validation process and can include a policy-qualified URL that fully describes the measures taken to validate the identity.

### Additional Data Fields

The data fields described in the previous section above may be stored directly within the Digital Certificate. These data fields hold data items that are relatively static.

However, there may be additional fields that are not required for all use cases, and these may be stored separately, e.g. to ensure compliance with data protection policies.

The banking application (302, 312) may carry additional verified attributes that are stored outside of the certificate and these can be shared by parties on a request to share basis where the use-case requires these data items. There is no definitive list, but the following that are usually held by banks are also typically useful to Ultimate Creditors (160) - especially merchants.
1. Customer Address - Optional - but useful for P2M services where paperwork and or delivery is required. Banks will hold a verified address.
2. Customer Mobile Number - Optional - but useful for P2M services where paperwork and or delivery is required.
3. Customer Email etc - Optional - but useful for P2M services where paperwork and or delivery is required.
4. A verified photograph of the party - so that they can be visually confirmed by the other party, possibly cross checked against the passport or other national ID.
5. Date of Birth (from passport or driving licence) - for age verification.
6. National ID / Social Security Number / Passport Number - along with date of check / expiration etc. along with any other ID or attribute that the scheme may support.

The certificate may flag the fact that additional attributes are available, but not what those attributes are.

### Dynamic Data Fields

7. Date / Time of last connection to the bank
8. Date / Time since phone was powered on (e.g. UpTime)
9. Pre-Authorised Cumulative Balance
10. Value of Crypto Assets stored locally (e.g. central bank digital currency (CBDC) - and this may be dependent upon some form of secure element (304, 314) being present on the user device (170, 180))
11. Unique Phone Identifier Hash - Digital Unique ID

SIM Swap is a known problem for banks, and when a banking application (302, 312) on a phone (user device (170, 180)) detects a change of hardware or SIM or other unusual item, then a more rigorous login process may be followed. The Unique Phone Identifier Hash may take a number of inputs read from the phone including MAC address, SIM, IMEI, IMSI, Serial Numbers, OS version and the like. If anything changes, then the Digital Unique Hash ID changes, and this prompts the rigorous log-in.

With respect to the example implementation and the risk of double spending, the UpTime value enables detection of a phone that has been powered off then on. If the UpTime value has been reset, then connectivity to the bank is required again to re-verify the pre-authorised cumulative balance and or available credit facility. If there has been continuous uptime, then a phone wipe and restore could not have occurred, and so off-line payments may be authorised from debt assets. The dates and times may be verified externally from time to time against official time sources including GPS sources, Cell Towers and NNTP servers. If the time has been modified and or cannot be verified, the other data items can be voided.

If the device's current date / time is more recent than the Date / Time of last connection to the bank AND there has been no modification of time on the phone (within normal parameters set by the bank as the phone's clocks are adjusted periodically by the O/S - and there is an assumption that all key time stamps are externally verified from a trusted source); then a restoration of a phone has not occurred, and as such, the double spend problem will not be a concern. If there is a gap, then a phone may have been restored to a previous state, and so must be treated with caution until it's records are reconciled with those of the bank. If the records are unbroken, then offline payments using the pre-authorised cumulative balance can be offered with confidence.

Banks may determine the periods of "off-grid" time they are prepared to accept based upon risk and the scale of loss that could occur. However, in accordance with embodiments of the present disclosure, the example implementation guarantees that fraud will be uncovered, and this will be biometrically bound to the account holder, so it is a low risk to manage. Once a phone or user is recognised as being compromised, a CRL list can be populated and distributed in the region and sooner or later, the user will get caught. Where a secure element (304, 314) is involved in the process; this can then be set to VOID and the user will not be able to continue to use the service until this is removed. If a user discovered a vulnerability and managed to make multiple off-line payments, they would need to collude with multiple merchants or recipients who are also fully offline; and this is something that the banks would be easily able to spot such that payments so made may be marked as fraudulent and the bank could limit exposure. This aspect of the disclosure is designed to service an edge case (phones without a secure element and working off-line) and banks would not be obligated to adopt it in order to derive all of the other benefits.

Where CryptoAssets are available and supported, and stored locally, and the device has either an external secure wallet, or a built in secure element (304, 314); then these may be securely used in offline payments. Where such secure facilities do not exist, they can still be used as a source of funds; but there must be some connectivity to the custodian service that can ensure double spending does not occur.

### The SPAIN message flows

### Start-Up

Before either party can progress towards creating a SPAIN message; a degree of initiation is required. The precise nature of this depends upon who the actors are; and what devices they are using. The ultimate debtor is assumed to be using a mobile user device, e.g. a smartphone. The ultimate creditor may be using a mobile, or may have a Point-of-Sale (POS) terminal, or a cloud account.

For P2P payments, a transaction may be initiated by both parties opening their banking applications (302, 312) and the Ultimate Debtor choosing "Make Payment" and the ultimate Creditor choosing "Receive Payment". This method of initiating a transaction would make the ultimate debtor 120, the "first user" as herein defined and the ultimate creditor 160, the "second user".

The Ultimate Debtor may also choose the "Request a Payment" from the ultimate creditor. It is noted that in this method of initiation the ultimate creditor 160 is the "first user" (as they initiate the transaction by requesting payment) and the ultimate debtor 120 becomes the "second user").

For P2M payments, usually there will be some form of POS or a mobile acting as a POS (i.e. using an app like SQUARE / LightSpeed / Clover / Toast / Zettle) usually with an NFC communication reader attached or QR codes. In this method of initiation, a merchant may ring up a total on the till and the debtor then opens their payment application 302 and gets ready to establish communications. The providers of such devices having modified their software to support the embodiments in this document.

### Establishing the Communication Channel

As noted in Figure 4, a communications channel 230 is established between the first and second user devices ((170, 180).

SPAIN messages will in the vast majority of cases be created using local internet connectivity when available.

However in the event of there being some kind of glitch, the method according to embodiments of the present disclosure, seeks to find an alternative communication channel that allows both parties to complete the payment in hand when local internet connectivity is not available.

Fallback methods could include:
- Point-2-Point WiFi access
- Point-2-Point BlueTooth Access
- NFC communication
- QR codes exchanged using cameras and screens (this method avoids all electronic interference as it is an optical method)
- Ultrasound

Note: Ultra Sound is a novel method that uses the speaker and microphone within a phone. It neatly avoids all electronic interference and can work on any phone (An example of P2P connectivity via ultra sound is outlined in
https://www.cl.cam.ac.uk/∼is410/Papers/batnet_draft.pdf).

By offering a plurality of fall back communication methods, the method according to embodiments of the present disclosure provides resilience to ensure that SPAIN message can be created and exchanged. The user devices (170, 180) may be configured to send out echo messages across all channels to detect availability should local internet connectivity be unavailable, and then to select the fastest fall back channel. The polling and testing for available alternative channels may be done automatically by the SDK and without action by the user at the first indication of an issue.

### Handshake and Encryption Setup

Transport Layer Security (TLS) is a cryptographic protocol designed to provide communications security over networks. The protocol is widely used in applications such as email, instant messaging, and voice over IP and securing HTTPS. User devices (170, 180) may be configured to use this protocol in exchanging SPAIN messages as it allows the ultimate creditor and debtor to communicate bilaterally in a way designed that prevents eavesdropping and tampering. When combined with digital certificates, the use of TLS allows for non-repudiation.

A method of creating SPAIN messages is described below and the use of TLS (or an equivalent) in the process of establishing a secure communications channel 230 is included in the steps below, The steps are as follows:
1. The creditor 120 and debtor 160 identify a network transport layer using the echo / response method outlined above. Usually this will involve parties opening their bank applications (302, 312) and/or using NFC and/or QR codes. However, if the banking application fail to automatically identify a network transport layer, a button within the banking application may configure the user device (170, 180) to try other supported methods, and the device would then poll through supported methods.
2. Once a viable P2P communication channel 230 has been established - TLS handshaking protocols are followed - as per industry standards. Once the communications channel has been secured by TLS, connections between the parties will have all of the following properties:
   a. The connection is private (or has confidentiality) because a symmetric-key algorithm is used to encrypt the data transmitted. The keys for this symmetric encryption may be generated uniquely for each connection and be based on a shared secret that was negotiated at the start of the session. The negotiation of a shared secret is both secure (the negotiated secret is unavailable to eavesdroppers and cannot be obtained, even by an attacker who places themself in the middle of the connection) and reliable (no attacker can modify the communications during the negotiation without being detected).
   b. The identity of the communicating parties can be authenticated using public-key cryptography. The underpinning scheme rules provide assurance that banks have issued credentials to both parties concerned. - i.e. there is a strong identity verification underpinned by bank KYC checks.
   c. The connection is reliable (or has integrity) because each message transmitted includes a message integrity check using a message authentication code to prevent undetected loss or alteration of the data during transmission.
3. Where there is connectivity available to the internet, both parties may check against the issuer's Certificate Revocation List (CRL) to ensure that the party is still authorised by their bank to send and receive payments
4. In the event that connectivity is not available, and the debtor is relying on funds not stored locally on the device (e.g. the debtor 120 is not relying on crypto or local wallets), the date of the customer's last connection to their bank may be exchanged to ensure that the credentials are reasonably fresh. Depending upon the size of the CRL, parties may download and store part or all of this list as a cache. For example, if customer banking applications are configured to connect to the internet once a fortnight in order to remain valid, then the cache only requires that two weeks worth of CRLs are stored, as any revoked certificate older than that would be voided by the "freshness" test. It is noted however that the period between caching CRLs could be anywhere from minutes to months. In the event of a pre-funded wallet or crypto asset being used as the source of funds for the transaction, then the asset may be moved from device to device.
5. A clock offset for each of the parties may be recorded, and if possible, both parties may check this against an external source such as a GPS satellite or NNTP time server if available. The offset may be used by banks to block payments, or simply note the difference - as this may indicate a risky behaviour.

### Message Flows

### P2P/M Push Payments - Example Transaction

Scenario: It is imagined that classically two parties will verbally agree to make a payment to/undertake a transaction with each other. This could be face-2-face, or over the telephone, or via the internet or other medium. Both parties (120, 160) log into their respective banking applications (302, 213), establish a communication channel 230, and complete handshaking, such that basic verified credentials from the parties' certificates have been shared with each other.

The banking applications (302, 213) may each then present a message to both parties to determine if either party wants to send or receive a transaction One party will choose to be the Ultimate Debtor 120. The other party can remain passive - as their role will be inferred once a pain.001 arrives.

The Ultimate Debtor selects "Send money to Mr X" (where Mr X is the name stored in the digital certificate).
1. The ultimate debtor 120 populates a pain.001 message (transaction message 320) using the verified credentials found in both the Ultimate Debtor 120 and Ultimate Creditor 160 certificates along with details of the payment amount and other ancillary fields as required by the use case. If a connection is available to the Debtor Bank 130 - then the amount is ring fenced from their available balance. If not, the Ultimate Debtor's banking application 302 reduces the locally stored value in the Pre-Authorised Cumulative Balance by the amount of the payment (for off-line payments). The ultimate debtor 120 uses the public key of the ultimate creditor 160 and encrypts the message using a multi-party protocol. The message is signed using the Ultimate Debtor's private key, and the signature is attached. The message is then encrypted to: the Debtor's Bank public key; the Creditor's Bank public key; the Ultimate Debtor's public key; and the Ultimate Creditor's Public key. This message is a non-repudiable confirmation of payment intent only readable by the stakeholders involved.
   a. Optionally, where both parties have agreed out of channel to provide additional attributes, the Ultimate Debtor 120 may opt to include a subset of those they have on hand. The attributes supplied with consent are embedded into the pain.001 message and form part of the signed / encrypted payload.
   b. Optionally, where both parties have agreed out of channel to provide additional attributes, the Ultimate Debtor 120 may request additional data attributes from the Ultimate Creditor 160 - potentially making the ability of the Ultimate Creditor to accept the payment conditional upon their supply. For example, this might be details of a business; or an address; or an official receipt with detailed invoice. The request for attributes is embedded into the pain.001 message and is part of the signed / encrypted payload.
   c. The ultimate debtor's clock offset is included and checked to ensure it is within acceptable limits.
2. The signed encrypted pain.001 is sent over the established communication channel 230 from the Ultimate Debtor to the Ultimate Creditor. This corresponds to step 420 in Figure 4 with the ultimate debtor 120 as the "first user" and the ultimate creditor 160 as the "second user".
3. The Ultimate Creditor receives the pain.001 (corresponding to step 430 in Figure 4) and decrypts the pain.001 and displays the contents on their device 180. All fields are validated by the banking application 312 upon arrival to ensure the message is secure (step 440 in Figure 4). The ultimate creditor 160 is then required to accept or reject this payment by pressing a button or other means on their bank app. A check is made against any locally cached CRL list including issuing banks (to deal with insolvency) and any active known fraudulent accounts. Upon acceptance, the decrypted message is counter signed using the Ultimate Creditor's private key and enveloping the whole of the pain.001 including the Ultimate Debtor's signature. The message is then encrypted to all of the keys used in step 1 so that only the Ultimate Debtor and Creditor along with their banks can decrypt and read this. This message is now a non-repudiable confirmation of payment intent only readable by the stakeholders involved (this is the "confirmation transaction message 330" referred to above). At this point, the creditor's phone screen may go GREEN (or otherwise provide a confirmation notification) - to confirm the receipt and acceptance of the message. This is an important state as even if the return leg fails for the acknowledgement, there is a visual indication that the Creditor 160 will receive funds and this will typically be visible to the Debtor 120 too if they are face-2-face - which allows the transaction to be closed and they can move on.
   a. Optionally, if this is a merchant interaction, the merchant may attach additional digital information such as a digital receipt, or digital goods (in the instance of somebody buying crypto assets). If these are mandated / demanded by the Ultimate Debtor, then they payment cannot be accepted without providing consent to provide these. The requested attributes are embedded into the pain.001 message and form part of the signed / encrypted payload.
   b. The Ultimate Creditor's clock offset is added, and this must be aligned with the Ultimate Debtor's Clock Offset and within scheme agreed tolerances.
4. The Ultimate Creditor countersigned encrypted pain.001 (confirmation transaction message 330) is sent over the established communication channel 230 from the Ultimate Debtor to the Ultimate Creditor. This corresponds to step 450 in Figure 4
5. The Ultimate Debtor receives the countersigned encrypted pain.001 - and logs this transaction in their banking applications 302 ledger. Visually / Audibly some kind of success / fail indicator is made, i.e. the screen goes green and pings.

If the transaction has completed without interruption of the communications channel 230, then both the Ultimate Debtor 120 and Ultimate Creditor 160 receive notifications indicating success. If they don't then the Ultimate Debtor's application 302 will automatically retry a set number of times to request a copy over the open secure communication channel 230. If this fails, the Ultimate Debtor 120 still has the knowledge that they sent a pain.001 and verbally or visually it has been communicated that this was accepted. Furthermore, as soon as the Ultimate Debtor 120 is able to connect to the internet, they will be able to monitor the distributed ledger for the appearance of the message from the Ultimate Creditor, and if required retain a copy for their own records.

### P2P/M Request to Pay Payments - Example Transaction

Scenario: It is imagined that classically two parties will verbally agree to make a payment to each other. This could be face-2-face, or over the telephone, or via the internet or other medium. A point-of-sale device (POS) may comprise one of the two user devices in this use case. Such a POS device could be a virtual phone based or a hardware version or a hybrid (e.g. like SQUARE^{®}). Both parties (120, 160) log into their respective banking applications (302, 312), . establish a communication channel 230, and complete handshaking, such that basic verified credentials from the parties' certificates have been shared with each other.

In this instance, the Ultimate Creditor 160 will construct an Request-to-Pay (RTP) message, and present this to the Ultimate Debtor 120. When the Ultimate Debtor 120 opens their Banking Application 302 following handshakes, it may as a default present a message asking if the debtor 120 wants to send or receive a transaction as in the push payment use case. However, the Ultimate Debtor will in all likelihood be aware why they opened their banking application 302, and will remain passive at this point. The Ultimate Creditor adopts their role by selecting the "Receive Money" option. In the event of a POS driving this, this is likely to be done automatically.
1. The ultimate creditor 160 populates a pain.001 message using the verified credentials found in both the Ultimate Debtor 120 and Ultimate Creditor 160 certificates along with details of the transaction amount and other ancillary fields as required by the use case that are being requested. The message is signed using the Ultimate Creditor's private key, and the signature is attached. The message is then encrypted by the Ultimate Creditor 160 using a multi-party protocol to include: the Debtor's Bank public key; the Creditor's Bank public key; the Ultimate Debtor's public key; and the Ultimate Creditor's Public key. This message is now a non-repudiable confirmation of a Request to Pay message and is only readable by the stakeholders involved.
   a. Optionally, where the Ultimate Creditor 160 wishes to provide additional data in the request, e.g. invoices or warranty information etc the Ultimate Creditor may also choose to add such attributes. The additional attributes / objects are embedded into the pain.001 message and form part of the signed / encrypted payload.
   b. Optionally, where the Ultimate Creditor 160 requires additional attributes, the Ultimate Creditor may include a request for these additional data attributes in the pain.001 potentially making the ability of the Ultimate Debtor 120 to make the payment conditional upon their supply (e.g. Age Verification for the purchase of alcohol - or a delivery address). The request for attributes is embedded into the pain.001 message and is part of the signed / encrypted payload.
   c. The ultimate creditor's clock offset is included.
2. The signed encrypted pain.001 is sent over the established communication channel 230 from the Ultimate Creditor to the Ultimate Debtor. This corresponds to step 420 in Figure 4 with the ultimate creditor 160 as the "first user" and the ultimate debtor 120 as the "second user".
3. The Ultimate Debtor 120 receives the pain.001 (corresponding to step 430 in Figure 4) and decrypts the pain.001 and displays the contents on their device 170. All fields are validated by the banking application 302 upon arrival to ensure the message is secure and from an authorised party and the type of request is appropriate to the account type (step 440 in Figure 4). The ultimate debtor 120 is then required to accept or reject this payment request by pressing a button or other means on their bank app. A check is made against any locally cached CRL list including issuing banks (to deal with insolvency) and any active known fraudulent accounts. Upon acceptance, the message is counter signed using the Ultimate Debtor's private key and enveloping the whole of the pain.001 including the Ultimate Creditor's signature. The message is then encrypted to all the keys used in step 1 so that only the Ultimate Debtor and Creditor along with their respective banks can decrypt and read this. This message is now a non-repudiable confirmation of payment intent only readable by the stakeholders involved (this is the "confirmation transaction message 330" referred to above). The Debtor's phone screen may go GREEN (or otherwise provide a confirmation notification), subject to the payment being valid and there being sufficient funds/facility available. However, unlike in the push payment, they must wait for the Ultimate Creditor's Acceptance.
   a. Optionally, if the Ultimate Creditor 160 requested additional attributes, then the Ultimate Debtor may attach the requested attributes. If these are mandated / demanded by the Ultimate Creditor, then they payment cannot be made without providing consent to share these. The requested attributes are embedded into the pain.001 message and form part of the signed / encrypted payload.
   b. The Ultimate Debtor's clock offset is added, and this is compared with the Ultimate Creditor's Offset and both values must be within scheme agreed tolerances.
4. The Ultimate Debtor's countersigned encrypted pain.001 (confirmation transaction message 330) is sent over the established communication channel 230 to the Ultimate Creditor.
5. The Ultimate Creditor receives the countersigned encrypted pain.001 - and logs this transaction in their banking application's 302 ledger and POS and marks the payment as complete. Visually / Audibly some kind of success / fail indicator is made, i.e. the screen goes green and pings.

If the transaction has completed without interruption of the communications channel 230, then both the Ultimate Debtor and Ultimate Creditor receive notifications indicating success. If they don't then the Ultimate Debtor's application 302 will automatically retry a set number of times to request a copy over the open secure communication channel.

### The Double Spend Problem

Most Real Time Payments happen in environments where at least one of the parties has partial connectivity at the time of payment. The method and system according to embodiments of the present disclosure provides for transactions to be reliably processed from a consumer experience point of view. The transaction may be processed immediately, but in the event of a problem, as soon as either party is in a position to check their own bank account for clearing and settlement, the payment will clear and settle (as the party with connectivity is able to send the confirmation transaction message 320 to the transaction system in accordance with step 460 of Figure 4). Fraud and security problems are minimised as both parties have identical non-repudiable copies of the payment initiation message, and the banks can process the transaction.

There is however a known problem with digital payments; and this is the "double spend" problem. The combination of a central infrastructure and the bank holding your money prevents the problem arising. However, for truly off-line payments, these safeguards cannot be relied upon.

Double-spending is a fundamental flaw in a digital cash protocol in which the same single digital token can be spent more than once (see https://en.wikipedia.org/wiki/Double-spending for more details). A digital token (just like a digital file) is infinitely duplicable. Where that token is digital cash, then a malicious actor could duplicate and re-spend that token again and again. As with counterfeit money, such double-spending leads to inflation by creating a new amount of copied currency that did not previously exist.

This problem though only exists where digital tokens are stored on a device that can operate independently of banks and or central infrastructure. For Real Time Payments, these tokens could either be in the form of pre-paid crypto assets (i.e. digital notes and coins) that have been withdrawn from a bank account and transferred to a mobile phone; or credit facilities in which a bank has provided a digital currency capability (i.e. a digital credit card that keeps track of the facility offered and remaining balance available).

One scenario in which the double spending problem may be encountered is with a user device (e.g. a smartphone) which is enabled to make offline P2P and P2M payments. An Ultimate Debtor acting maliciously in this scenario could take an image (i.e. a full system backup) of the phone and then undertake an offline payment in which an Ultimate Creditor receives funds. According to the double spending problem, the Ultimate Debtor could then leave the merchant and restores the phone to the state it was in before the transaction with the merchant. Following this, the same digital token could be used again in other stores as long as no external observer sees the same digital asset being spent again.

In the event of a credit facility being used, then the same fraud is possible, but the Ultimate Debtor never had any crypto asset in the first place. In effect, they are able to wipe their slate clean again and again.

### The Crypto / Pre-funded Solution

The advantages of a crypto solution, or a prefunded solution, or perhaps a CDBC solution is that when the asset is transferred from person to person, then in theory, it can be spent again - just like cash.

Known attempts to address the double spend problem include a system that requires a secure token (e.g. a keyfob or a sticker that sits between the phone and SIM; or a smart card form factor). These secure tokens have a number of pros and cons including battery life and the dependency on having a mobile phone.

However, known systems that address double spend are ideal in terms of on-boarding and there exists a need for a solution that has low friction and low on-boarding and fulfilment costs.

To achieve this, one needs a solution that can work entirely within the capabilities of the mobile phone ecosystem, and such capabilities are becoming more commonplace. The use of a secure element chip (feature 304, 314 above) or secure SIM cards provide a route to addressing the double spend problem without the issues with other known systems.

Depending upon the capability of the Secure Element (or other Trusted Computing type device (https://en.wikipedia.org/wiki/Trusted_Computing), a number of solution choices and options are possible. One option is to simply bind the wallet to the phone (e.g. a hash of the account number and IMEI, and include the hash of the last known balance and the last balance itself). If following a restart of the user device (170, 180), the hash does not match that generated from the inputs, then a remediation process needs to be invoked. If a large WORM portion of memory exists in an external secure device, then all transactions and balances can be stored - and never erased.

An advantage of a secure element based solution, is that the Ultimate Creditors are able to spend any received Crypto Assets immediately upon receipt, subject to the Ultimate Debtor having sufficient locally cached crypto assets in the event of no connectivity to their banks.

### The Debt / Pre-Authorisation Solution

The method and system according to embodiments of the present disclosure provides a solution that, where a payment cannot be made over the central infrastructure, both parties can generate an identical non-repudiable copy of a transaction message (the confirmation transaction messages 330) that confirms the parties' intent to conclude a transaction. Should the Ultimate Debtor erase and restore their user device, then the Ultimate Creditor is able to present their copy of the confirmation transaction messages 330, and ultimately the funds will be moved to the Ultimate Creditor.

In the event of the Ultimate Debtor resetting their user device, then as soon as a creditor connects to the internet, a discrepancy will be flagged. If the transaction is secured by biometric validation, then it will be very challenging for any debtor to argue that they did not make the transaction.

In the event that the customer has some form of secure element (304, 314); then such problems can be designed out. If the last balance is stored in the secure element; then when the user device is restored and it is found that the value doesn't match, the user device may be configured to enter a safe-mode that requires connection to the internet before further debt funded payments can be made.

It is therefore noted that using a secure element for transfer of crypto assets can prevent double spend and, in the event the ultimate debtor attempts to act maliciously, any transaction records between the ultimate debtor and creditor can be recovered from the duplicate confirmation transaction message held by the ultimate creditor.

Where connectivity has prevented both the ultimate debtor and creditor from communicating with their banks (130, 150) and the central processing infrastructure 140 then the banking applications (302, 312) may be configured to prompt the users to connect to the internet when there is either a sizeable sum to clear, or a payment is approaching a predefined cut-off date.

It will be appreciated that various changes and modifications can be made to the present disclosure without departing from the scope of the present application.

## Claims

1. A method of processing a transaction between a first user (120), associated with a first user device (170), and a second user (160), associated with a second user device (180), within a transaction system (100), the method comprising:
establishing a communication channel (230) between the first and second user devices (170, 180);
sending (420), from the first user device to the second user device over the communication channel, a transaction message (320) to initiate the transaction between the first and second users, the transaction message comprising transaction data;
receiving (430) the transaction message at the second user device;
validating (440) the transaction data within the received transaction message;
sending (450), from the second user device to the first user device over the communication channel, a confirmation transaction message, the confirmation transaction message confirming that the transaction has been approved by the first user and second user;
sending (460) the confirmation transaction message (330) to the transaction system.

2. A method as claimed in Claim 1 wherein, in the event of a processing failure, waiting a predefined period and then publishing the confirmation transaction message (330) to a distributed ledger (240).

3. A method as claimed in Claim 1 or Claim 2, wherein either the first user or the second user is a debtor in the transaction and the debtor is associated with a debtor banking entity (130) and wherein the debtor banking entity has preauthorised transactions up to a preauthorisation limit, the transaction system being configured to automatically reconcile the transaction on receipt of the confirmation transaction message (330).

4. A method as claimed in Claim 3, wherein the user device of the debtor comprises a banking application (302) that is configured to store the preauthorisation limit and the method comprises subtracting transaction amounts from the preauthorisation limit to determine an available transaction amount and limiting future transactions to the available transaction amount.

5. A method as claimed in any preceding claim, wherein
either the first user or the second user is a debtor in the transaction and the debtor is associated with a debtor banking entity (130), and;
wherein the debtor banking entity has preauthorised transactions up to a preauthorisation limit, and;
wherein, in the event the transaction exceeds the preauthorisation limit, priorto sending the transaction message (320) from the first user device to the second user device, the method comprises contacting (602) the debtor banking entity for authorisation to proceed with the transaction.

6. A method as claimed in any one of Claims 1 to 3, wherein the first user device (170) and the second user device (180) comprises a secure environment (304, 314) configured to store a cryptocurrency wallet and the transaction comprises transferring cryptocurrency assets between the first and second user devices.

7. A method as claimed in any preceding claim, wherein the communication channel (230) comprises one of: a point-to-point Wifi channel between the first and second user devices; a point-to-point Bluetooth^{®} channel between the first and second user devices (170, 180); a communication channel between the first and second user devices using near-field communications protocols; the display of visual data on a display screen of one of the first and second user devices and subsequent capture using a camera device on the other user device of the visual data; an audio communication channel.

8. A method as claimed in any preceding claim, wherein the transaction message (320) is signed using a private key associated with the first user device and encrypted using a public key associated with the first user device (170), a public key associated with the second user device (180), a public key associated with a first user banking entity (130) and a public key associated with a second user banking entity (150).

9. A method as claimed in Claim 8, wherein the confirmation transaction message (330) is signed using a private key associated with the second user device (180) and encrypted using the public key associated with the first user device (170), the public key associated with the second user device (180), the public key associated with a first user banking entity (130) and the public key associated with a second user banking entity (150).

10. A method as claimed in any preceding claim, comprising, subsequent to setting up the communications channel (230), the first and second user devices (170, 180) checking with a third party authorisation system that the other party is authorised to process a transaction.

11. A method as claimed in any preceding claim, wherein the first and second user devices (170, 180) exchange user device connectivity data during establishment of the communications channel (230) and wherein, in the event user device connectivity data does not meet predefined connectivity requirements, communicating with the transaction system (100) to update the user device connectivity data.

12. A method of processing a transaction between a first user (120), associated with a first user device (170), and a second user (160), associated with a second user device (180), within a transaction system (100), the method comprising;
establishing (410) a communication channel (230) between the first and second user devices;
sending (420), from the first device to the second device over the communication channel, a transaction message (320) to initiate the transaction between the first and second users, the transaction message comprising transaction data wherein the transaction message is received at the second user device and the transaction data within the transaction message is received by the second user device;
receiving (430), at the first device over the communication channel, a confirmation transaction message from the second device, the confirmation transaction message confirming that the transaction has been approved by the first user and second user;
sending (460) the confirmation transaction message to the transaction system.

13. A method of processing a transaction between a first user (120), associated with a first user device (170), and a second user (160), associated with a second user device (180), within a transaction system (100), the method comprising;
establishing (410) a communication channel (230) between the first and second user devices;
receiving (430) at the second user device over the communications channel a transaction message (320) from the first user device, the transaction message comprising transaction data to enable the transaction between the first and second users to be initiated;
validating (440) the transaction data within the received transaction message;
sending (450), from the second user device to the first user device over the communication channel, a confirmation transaction message (330), the confirmation transaction message confirming that the transaction has been approved by the first user and second user;
sending (460) the confirmation transaction message to the transaction system

14. A first user device (170) configured to process a transaction with a second user device (180), the first user device being associated with a first user and the second user device being associated with a second user, the first user device comprising;
a communication module (308) configured to connect to and send and receive data from a corresponding communication module (318) on the second user device (180);
a processor (300) arranged to:
establish (410) a communication channel (230) via the communication module (308) with the second user device;
generate (502) a transaction message (320) comprising transaction data to enable the transaction between the first and second users to be initiated;
send (420) the transaction message via the communication module (308) to the second user device;
receive (508) a confirmation transaction message (330) from the second user device via the communication module (308), the confirmation module confirming that the transaction has been approved by the second user;
send (460), via a network communication module (306), the confirmation transaction message to a transaction system.

15. A second user device (180) configured to process a transaction with a first user device (170), the first user device being associated with a first user and the second user device being associated with a second user, the second user device comprising:
a communication module (318) configured to connect to and send and receive data from a corresponding communication module (308) on the second user device (180);
a processor (310) arranged to:
establish (410) a communication channel (230) via the communication module (308) with the first user device;
receive (430) a transaction message via the communication module (318) from the first user device, the first user device comprising transaction data to enable the transaction between the first and second users to be initiated;
validate (440) the transaction data within the received transaction message (320);
generate (504) a confirmation transaction message (330), the confirmation transaction message confirming that the transaction has been approved;
send (450), from the second user device to the first user device over the communication channel, the confirmation transaction message;
send (460), via a network communication module (316), the confirmation transaction message to a transaction system.
